# EUROPEAN PATENT APPLICATION

(11) **EP 1 353 454 A2**
(43) Date of publication of application: **15.10.2003**
(21) Application number: 03016070.9
(22) Date of filing: 21.09.2000
(51) Int. Cl.: H04B 7/185

(54) **Multi-beam satellite communications system**

(30) Priority: 27.09.1999 US 156170 P; 23.05.2000 US 576475
(62) Divisional of application: 00968379.8
(71) Applicant: EMS Technologies, Inc., Norcross, GA 30092 (US)
(72) Inventor: Sharon, Thomas E., Duluth, GA 30097 (US); Taylor, Thomas S., Atlanta, GA 30327 (US); Hafner, William R., Alpharetta, GA 30022 (US); Rigg, Steven H., Norcross, GA 30092 (US); Howell, James M., Woodstock, GA 30189 (US); Glynn, Thomas W., Annapolis, Maryland 21401 (US); Kershner, Dennis L., Ellicott City, Maryland 21043 (US)
(74) Representative: Grünecker, Kinkeldey, Stockmair & Schwanhäusser Anwaltssozietät

(57) **Abstract**

A satellite communications system having ground user terminals, hubs, and a geosynchronous satellite. The satellite generates a network of spot beam coverage areas on the earth. A hub and at least one ground terminal are located in each of at least two spot beams. A first user terminal transmits an uplink signal according to a first signal protocol to the hub through the satellite. A second user terminal receives a downlink signal according to a second signal protocol through the downlink spot beam from the hub through the satellite. The hub may be located in the same spot beam coverage area as the first or the second user terminal or may be located in an altogether different spot beam coverage area. Through selective frequency and/or polarization routing on board the satellite, a hub located within a "parent" beam can communicate with user terminals within the parent beam at a specified frequency and polarization, and can communicate with users in other "dependent" beams on a different frequency and/or polarization. This routing allocates the total available bandwidth between parent and dependent beams. The system enables asynchronous communications between each hub and the satellite to maximize frequency re-use and the overall capacity of the system.

## Description

### RELATED APPLICATION

This application claims priority to U.S. Provisional Patent Application Serial No. 60/156,170 filed on September 27, 1999.

### TECHNICAL FIELD

This invention relates to satellite communications systems using multiple spot beams from a geosynchronous earth orbit satellite to provide selective coverage of the continental United States and, more particularly, relates to a system having a satellite receiving hub in every spot beam that allows for asynchronous communications between each hub and the satellite for maximizing frequency re-use.

### BACKGROUND OF THE INVENTION

The rapid growth of the Internet and the unavailability of high-speed connections from standard telephone lines and local cable providers have resulted in an intense search for an alternative high-speed mode of communications. Satellite communications ("SATCOM") systems are a natural selection for replacing conventional land-based communications systems as a means of providing high-speed digital communications new links.

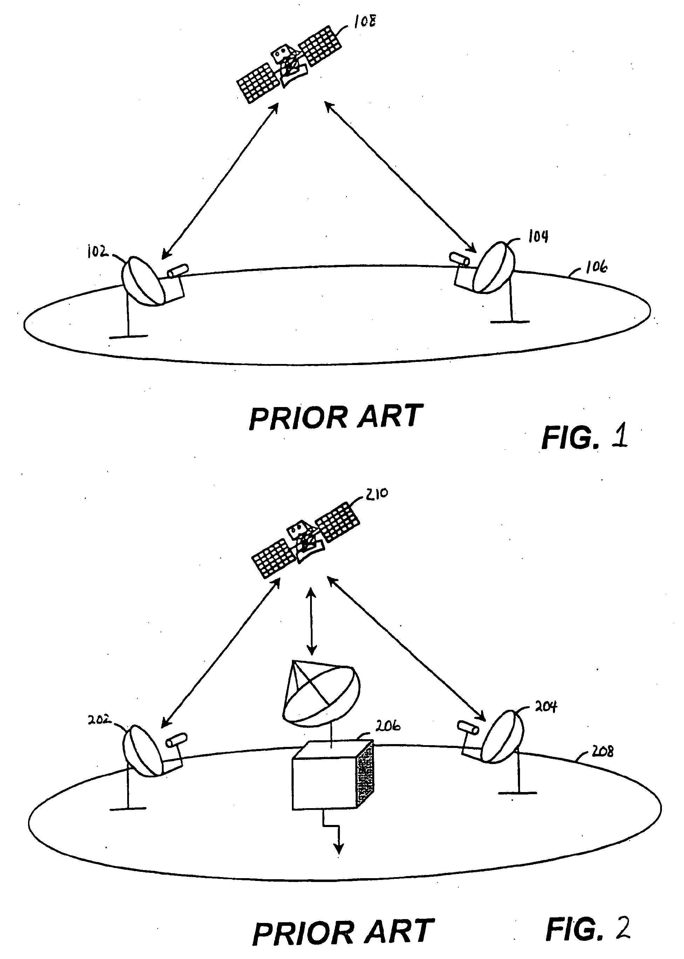

Typical SATCOM system configurations are shown in FIGS 1-3. FIG. 1 is an illustration of a SATCOM "bent-pipe" configuration for two ground terminals located within the same beam. In the bent-pipe configuration, a first ground terminal **102** transmits a signal on the uplink frequency band to a GEO satellite **108**. Upon reception of the signal, the GEO satellite shifts the frequency of the signal to a downlink frequency and retransmits the signal to the second ground terminal **104**. The "bent-pipe" configuration does not require the satellite to have on-board processing. Rather, the satellite merely acts as a relay from one ground terminal to another ground terminal. Because the satellite does not have on-board processing, the "bent-pipe" configuration is typically limited to use within a single beam **106**.

Another standard SATCOM configuration is shown in FIG. 2, which illustrates a SATCOM "hub" configuration. In the "hub" configuration, a series of ground terminals **202, 204** and a single hub **206** are located within a single beam **208**. The hub acts as a two-step bent-pipe configuration, in which the uplink signal is routed from the GEO satellite **210** to an intermediate ground hub **206**. The hub acts as a local control center to assign channels and other functions associated with the network management. The intermediate stop typically adds an additional 1/4-second to the signal propagation delay normally associated with the round-trip to a GEO satellite, which is unacceptable for high-quality telephony services. In order to avoid this additional delay, the hub configuration can also operate as a "bent-pipe" configuration, in which the hub is bypassed and the downlink signal is routed directly to a second ground terminal.

Additionally, ground terminals within the hub configuration may also operate in a one-way "broadcast" mode, in which a single ground terminal transmits an uplink signal to the GEO satellite, which shifts the frequency for transmission on the downlink channel. However, instead of simply transmitting the downlink signal to a single ground terminal, the satellite "broadcasts" the signal over the downlink channel to every ground terminal within the beam.

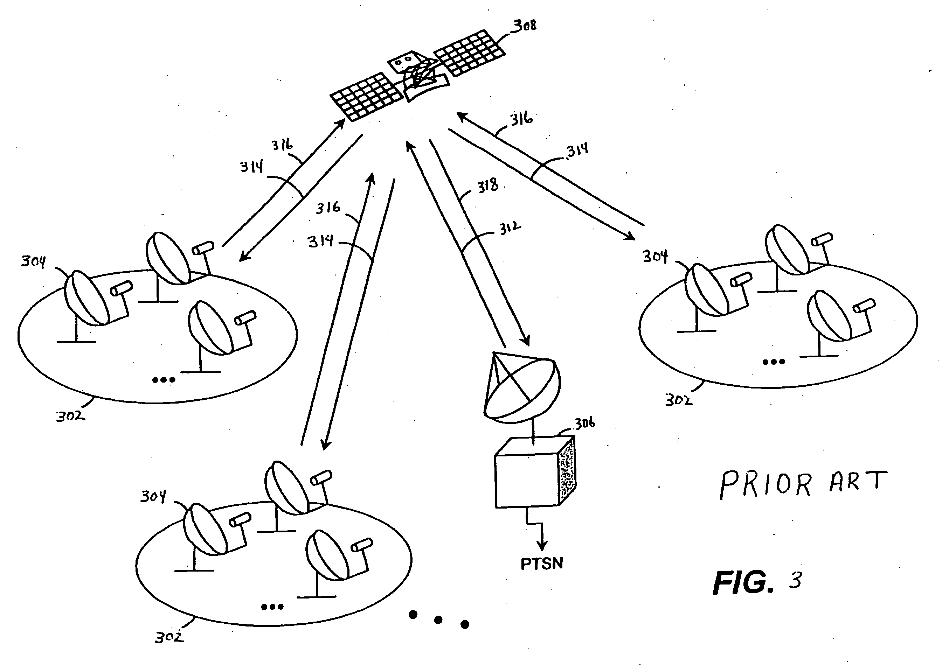

Still another standard SATCOM configuration is shown in FIG. 3, which is an illustration of the SES ARCS SATCOM system. The ARCS SATCOM system combines DVB technology on the downlink signal with a high-speed satellite uplink signal. The ARCS SATCOM system uses a standard Ku-Band DVB downlink **314** and a "piggyback" Ka-band payload, which routes Ka-band uplinks **316** from individual ground terminals **304** to a single hub **306**, located in Luxembourg. The ARCS SATCOM system provides eight beams **302** on the Ka-band uplink, each of which has a footprint of approximately 500 miles diameter on the earth. As a result of this high gain from the receive antenna on the satellite **308**, a dish only 75 cm in diameter with a 1/2W transmitter can provide 144 Kbps return channel data rate. The Ka-band uplinks from all eight of the beams are returned to the single hub in Luxembourg for processing. The DVB video data for the Ku band is broadcast on an uplink signal **312** to the satellite from the hub **306**, and is re-broadcast on the downlink signal using Ku-band DVB transponders.

Conventional SATCOM systems using geosynchronous earth orbits ("GEO") satellites have typically provided two types of services: (a) a relay mode, in which the GEO satellite merely relays a signal from one earth terminal to another, and (b) a broadcast mode, in which the GEO satellite transmits a signal to a large number of ground terminals. In the relay mode, also known as a "bent-pipe" mode, a ground terminal transmits a signal using an uplink frequency to the GEO satellite, which retransmits the signal to a second ground terminal using a downlink frequency. This mode is illustrated in FIG. 1. Because the transmission footprint of the GEO satellite on the earth surface is large, the power density of the signal is very low. This requires that the receiving antenna be sufficiently large, ranging from one to three meters in diameter, to achieve the requisite antenna gain. However, these large antennas are practical only for large, commercial users. Individual consumers cannot afford the space or expense of these large ground antennas. Individual consumers are willing to tolerate only small antennas, such as those used for direct broadcast satellite (DBS) transmissions, which are typically one to two feet in diameter.

Small ground antennas often operate with a "hub" service, in which the user uplink is routed from the satellite to an intermediate ground station known as the "hub." This service is illustrated in FIG. 2. The hub usually acts a local control center to assign channels and other functions associated with network management. This intermediate "stop" adds an additional 1/4 second to the propagation delay associated with the round trip to synchronous orbit, so the total delay in one terminal transmitting to another is approximately 1/2 second - a delay many consider too long for viable high quality telephony today. The GEO satellite can also operate in a "mesh" configuration in which the user downlink is routed directly to the other user without the hub transmission.

In the broadcast mode, a hub or "feeder link" sends the entire spectrum of broadcast signals to the GEO satellite, which then rebroadcasts the signals to the region of interest. It is important to note that in the broadcast service all users receive the same signals, which are typically transmitted at nearly equal power levels because the ground terminals are assumed to receive the entire band of signals everywhere. The broadcast spectrum is divided up into a number of transponder bandwidths, each of which can carry a multiple of standard TV channels, high definition TV, or data. This type of transmission has become especially important in the direct broadcast satellite ("DBS") of standard broadcast television as a competing service to cable.

Typically, GEO SATCOM systems use a single wide area coverage beam with a diameter of approximately 2,500 miles to provide complete coverage of CONUS. Therefore, in order for a ground antenna to receive adequate signal strength, the transmitter on the satellite must have sufficient power to provide an adequate power density within the single wide area coverage beam. However, this greatly increases the cost and complexity of the GEO satellite.

Another way to ensure that the ground terminal receives adequate signal strength is to use a ground station with a large diameter antenna to achieve the requisite gain. However, as the size of the antenna increases, so does the expense. Therefore, only commercial users are able to afford these antennas. Clearly, this solution is unacceptable to individual users, who demand cheaper, more aesthetically pleasing, smaller antennas.

Several attempts have been made to address this problem. One solution is to use a number of smaller spot beams instead of a single wide area coverage beam to cover the same geographical area. By decreasing the size of the spot beams while maintaining the same overall transmitted power, the power density within each spot beam increases. The increase in the power density within each spot beam enables the use of smaller ground antennas.

However, conventional systems employing spot beams typically only employ a single hub for the entire system. For example, in Europe, SES is preparing to deploy the ARCS system using the Astra 1H and 1K satellites to provide multi-beam coverage of Europe. The Astra 1H uses a standard Ku-Band direct video broadcast ("DVB") downlink and a "piggyback" Ka-band payload which routes individual user Ka-band uplinks to a single, central hub located in Luxembourg. The ARCS system uses eight beams on the Ka-band uplink, with each beam having a footprint of approximately 500 miles diameter on the earth to provide complete coverage of Europe. As a result of this high gain from the satellite receive antenna, a ground antenna of only 75 cm diameter with a 1/2W transmitter can provide a 144 Kbps return channel data rate. The Ka-band uplinks from all eight of the beams are returned to the single hub in Luxembourg. The Ku-band data for the DVB is broadcast up from a feeder link to the satellite from the Luxembourg hub and is broadcast down to the area covered by all eight spot beams through a single broadcast beam with Ku-band DVB transponders. A single-hub ARCS system employing spot beams is illustrated schematically in FIG. 3.

Other satellite systems being planned now propose to provide a bent-pipe mode between individual ground terminals in different spot beams. These satellites plan to use digital processing on board in order to route the signal from one spot beam to another, which greatly increases the cost of the system.

Thus, there is a general need in the art for a SATCOM system using multiple spot beams to cover at least selected areas of the CONUS. There is a further need in the art for a SATCOM system which has a hub in every spot beam.

### SUMMARY OF THE INVENTION

The present invention meets the above-described need by providing a SATCOM system having ground terminals, hubs, and at least one satellite stationed in a geosynchronous earth orbit (GEO) about the earth. The GEO satellite generates a network of spot beams covering selected area(s). A single hub and at least one ground terminal reside within each spot beam. A user terminal with a well-defined protocol can transmit an uplink signal to the hub through the GEO satellite. The user terminal also can receive a signal having a second well-defined protocol through the downlink spot beam from the hub through the GEO satellite. For example, the uplink from the ground terminal might use a MF/TDMA multiple access method to maximize the number of users who can be "on-line" at given time. The corresponding downlink signal might may use the standard "DVB-S" protocol, which supports both video and data transmissions.

The invention may also support a mode of operation where several individual spot beams shall share a single hub in a "parent/dependent" operational mode. Through selective frequency and/or polarization routing on board the satellite, a hub located within a "parent" beam would communicate with user terminals within the parent beam at a specified frequency and polarization and would communicate with users in other "dependent" beams on a different frequency and/or polarization. This routing would divide the total available bandwidth between these parent and dependent beams. Routing on board the satellite could be implemented to allow eventual separation between the parent and dependent beam by inclusion of a switch built into the on-board routing. This would allow full use of the available bandwidth in each beam. This method of deployment could allow a more gradual installation of hubs to restrict ground equipment costs at the beginning of service provision.

The invention may also support a second class of service, in which the hub downlink uses a second protocol that is adopted for transmission from a "commercial" ground terminal. The commercial ground terminal may use this second protocol for both the uplink and downlink signals to facilitate the transmission of data at high speed from a remote site. This type of terminal can play the role of the hub in terms of transmitting directly on the downlink to "residential" terminals in either a local spot beam mode or a broadcast mode to all spots beams simultaneously.

The invention may also include "intra-Beam" and "inter-Beam" services, in which the capacity of the system is optimized by a coordinated network operation control center ("NOCC"). The NOCC can assign uplink frequencies and polarizations to individual ground terminals based on the signal destination, for both intra-beam and inter-beam transmissions. The NOCC may also assign a frequency bandwidth compatible with a narrow-band uplink (the residential service) or a wide-band uplink (the commercial service). Protocols for the residential and commercial match the two protocols used by the hub. A portion of the uplink band is assigned to each service. The NOCC may also allocate a frequency band and polarization to designate the type of service based on whether the communications link is inter-beam or intra-beam.

The invention may also include a router for directing the signal to the appropriate spot beams for inter-beam transmission. The router may operate in one of two modes. First, the router may direct the signal to the appropriate spot beam by selection of the frequency used for the uplink. Alternatively, the router may also direct the signal to the appropriate spot beam based on the signal polarization. Additionally, the router may also be used with the broadcast mode. For the broadcast mode, the selection of a particular frequency sub-band and/or polarization routes the uplink signal to into every downlink beam. Alternatively, the sub-band and/or polarization may be routed to the NOCC for a "double-hop" rebroadcast to all downlink beams.

The invention may further provide for power control in each downlink spot beam to optimize system capacity and throughput. Additionally, due to the individual spot beams being small and covering a localized area, the local weather conditions and geographical location can be factored into to the power control for each beam. Additionally, by utilizing power control, channel allocation can be optimized to allow greater numbers of channels in spot beams that encompass heavy population centers and fewer channels in spot beams covering less densely populated areas.

The invention may also provide a high-speed wide area network to connect each hub in each spot to every other hub. The high-speed WAN may be high-speed optical fiber, conventional landline connections, satellite links, or the like.

That the invention improves over the drawbacks of prior SATCOM system employing multiple spot beams and accomplishes the advantages described above will become apparent from the following detailed description of the exemplary embodiments and the appended drawings and claims.

### BRIEF DESCRIPTION OF DRAWINGS

FIG. 1 is an illustration of a prior art "bent-pipe" mode SATCOM configuration.
FIG. 2 is an illustration of a prior art "broadcast" mode SATCOM configuration.
FIG. 3 is an illustration of a prior art SES ARCS SATCOM configuration.
FIG. 4 is an illustration of a SATCOM system providing multiple spot beams to provide coverage of at least selected areas of the CONUS in accordance with an exemplary embodiment of the present invention.
FIG. 5 is an illustration of a representative spot beam coverage pattern of the CONUS in accordance with an exemplary embodiment of the present invention.
FIG. 6 is an illustration of an alternative spot beam coverage pattern of the CONUS in accordance with an exemplary embodiment of the present invention.
FIG. 7 is an illustration of an exemplary embodiment operating in an intra-spot beam mode.
FIG. 8 is an illustration of an exemplary embodiment operating in the inter-spot beam mode.
FIG. 9 is an illustration of an exemplary embodiment operating in the broadcast mode.
FIG. 10 is an illustration of an exemplary embodiment operating in the remote hub broadcast mode.
FIG. 11 is an illustration of the frequency allocation of the uplink signal and the downlink signal for inter-spot beam mode based on signal frequency for an exemplary embodiment of the present invention.
FIG. 12 is an illustration of a frequency-based router circuit used for the inter-spot beam mode in accordance with an exemplary embodiment of the present invention.
FIG. 13 is an illustration of the frequency allocation of the uplink signal and the downlink signal for inter-spot beam mode based on signal polarization in accordance with an exemplary embodiment of the present invention.
FIG. 14 is an illustration of a polarization-based router circuit used for inter-spot beam mode in accordance with an exemplary embodiment of the present invention.
FIG. 15 is an illustration of the frequency allocation of the uplink signal and the downlink signal for an inter-spot beam mode based on both frequency and polarization of the signals in accordance with an exemplary embodiment of the present invention.
FIG. 16 is an illustration of a combination frequency/polarization-based router circuit used for inter-spot beam mode in accordance with an exemplary embodiment of the present invention.
FIG. 17 is an illustration of a parent-dependent SATCOM inter-beam configuration in accordance with an exemplary embodiment of the present invention.
FIG. 18 is an illustration of an exemplary spot beam pattern network for a parent-dependent configuration for the Western United States.
FIG. 19 is an illustration of an exemplary embodiment of the invention operating in a Network Operating Control Center (NOCC) SATCOM configuration.
FIG. 20 is an illustration of a combination frequency-based router circuit used for the NOCC configuration in accordance with an exemplary embodiment of the present invention.
FIG. 21 is an illustration of a 4:1, 3:1, and 2:1 combiner circuits used for on-board satellite transmitter power control in accordance with an exemplary embodiment of the present invention.

### DETAILED DESCRIPTION OF THE EXEMPLARY EMBODIMENTS

The current invention can provide a hub in every spot beam of a satellite for maximum frequency re-use and allows all signal processing to be accomplished on the ground. The notion of a hub in every spot beam is also fundamental to the notion of a high capacity, local broadcast/data service through a digital video broadcast (DVB) downlink format. Otherwise the satellite downlink cannot access sufficient uplink information bandwidth to broadcast into the multiple spot beams with unique data. Even though a direct broadcast satellite can broadcast to millions of users, the capacity for information content is only about 500 Mbps x 2 (assuming 500 MHz bandwidth x 2 polarizations), or 1 Gbps for the whole coverage area. The current inventive concept envisions systems with approximately 100 spot beams, each of which has ∼750 MHz bandwidth for each of two polarizations, or 150 Gbps potential capacity.

The hub in every spot beam concept also allows the modulation formats between ground terminal uplink and downlink signals to be different (i.e., FDMA on the uplink and TDMA on the downlink) which previously has been accomplished only by providing on-board digital processing. However, placing a hub in every spot beam allows the satellite to operate in a simple "bent-pipe design" with no on-board processing.

The use of spatially isolated spot beams allows maximum frequency re-use, which provides increased data capacity relative to the contiguous beam approach in which the beam overlap requires a frequency assignment approach and adjacent beams use only a portion of the band (4 and 7 sub-band assignments are common). The isolated spot beam approach also allows separate power control of each downlink beam to accommodate different traffic patterns and satellite power limitations. This can also be accomplished with a TDMA switching approach between downlink beams but at the expense of increased satellite and ground terminal complexity.

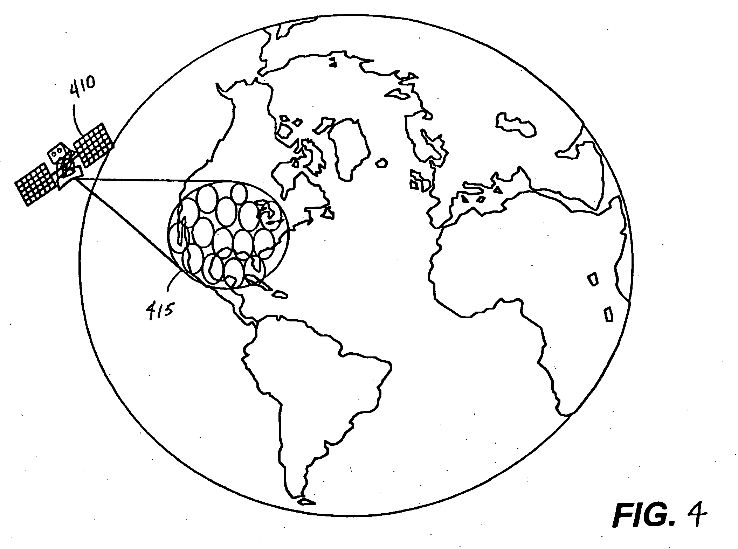

FIG. 4 illustrates an exemplary SATCOM system using a network of spot beams to provide coverage of at least selected areas of the CONUS. A satellite **410**, or a series of such satellites, stationed in a geosynchronous earth orbit above CONUS, provides the network of spot beams **415**. The SATCOM system may operate at either Ku-band frequencies, Ka-band frequencies, or both to provide broadcast video, local area broadcast video and bandwidth-on-demand Internet access. The exemplary SATCOM system may use GEO satellites that produce narrow spot beams for both the uplink and downlink signals so that a high data rate can be obtained on the uplink and downlink with a small dish size. For example, the effective radiated power ("ERP") requirement for the uplink transmit antenna is typically 1/100 of a Ku-band SATCOM systems currently in use and 1/10 of announced Ka-band systems.

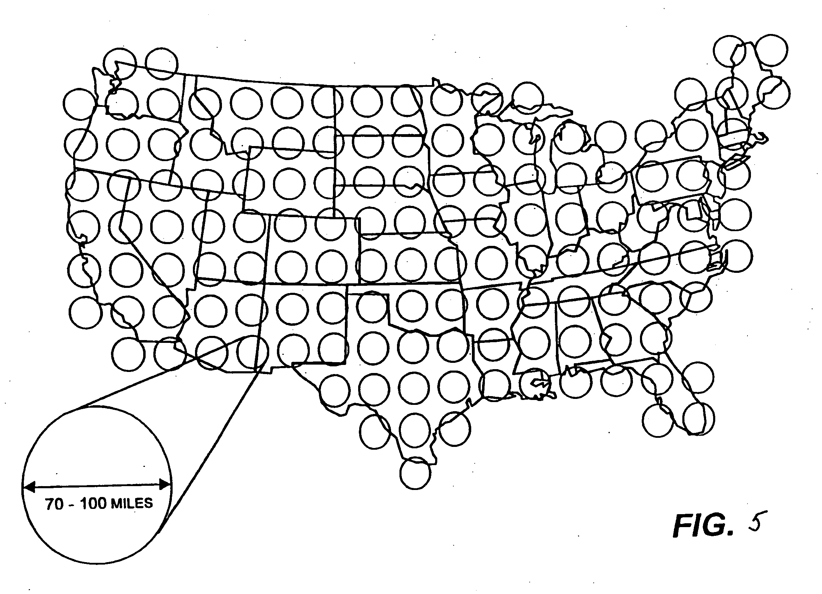

FIG. 5 illustrates a spot-beam coverage pattern of CONUS used by an exemplary embodiment of the present invention. The coverage pattern typically comprises a network of equally sized spot-beams covering selected areas of the CONUS. Typically, each spot beam may have a diameter between seventy (70) and one hundred (100) miles. The spot beams can be equally spaced to provide a substantially uniform coverage of the CONUS. In the alternative, the spot beams can be focused on selected areas of the CONUS.

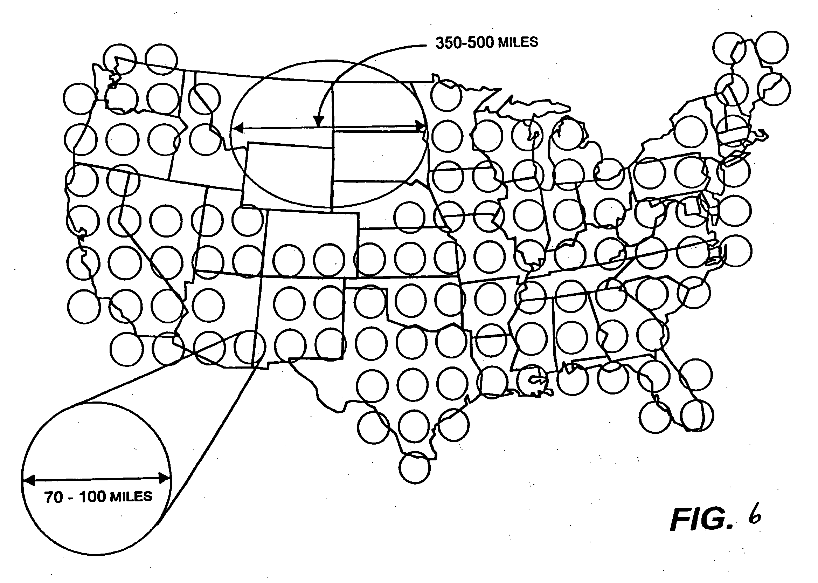

FIG. 6 illustrates an alternative spot beam coverage pattern for CONUS using an exemplary embodiment of the invention. In this pattern, a network of equally sized, equally spaced spot beams are arranged to provide coverage for areas having a high demand for services. Additionally, in areas where demand may be low, such as the northern plains states, a single, larger spot beam may be used to provide coverage. As the demand for services grows in the less populated areas, additional spot beams may be added to provide to meet the demand.

Additionally, the spot beams may be arranged in an uneven distribution to provide greater coverage in heavily populated areas and provide less coverage in less densely populated areas. Furthermore, spacing of individual spot beams may be dynamically altered to provide greater additional coverage in a high growth area to meet the demand. For example, the eastern and western seaboards of the United States each have a greater population than the northern plains states. Therefore, the density of spot beams along the East and West coasts may be higher than the density of spot beams over the northern plains states. Additional spot beams can be added to provide additional coverage as the demand for SATCOM services increases.

One application of the hub service supported by the present invention is Internet Access for both data and multi-cast broadcasting. A protocol similar to the DVB format allows the system to provide selected types of data interchangeably. Another type of service supported by the use of a hub in each spot beam is regional data multi-casting/broadcasting, in which all local TV stations are broadcast within a region. Yet another service could be national data multi-casting/broadcasting, in which the data broadcast is the same in every spot beam. This could implement the broadcast of nationally televised programming, or nationally broadcast data-casting.

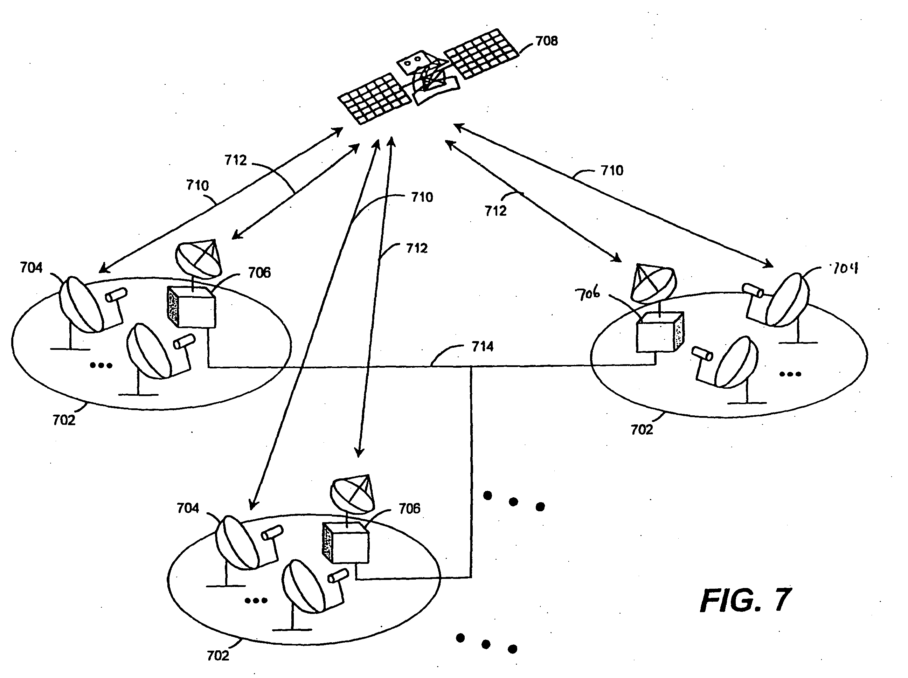

FIGS. 7, 8, 9, 10 and 17 are illustrations of exemplary embodiments of the invention. FIG. 7 illustrates a multi-beam SATCOM system **20** with a hub **706** in every beam **702** operating in an intra-spot beam mode. In the SATCOM system **20**, each spot beam **702** is spatially isolated from every other spot beam. This allows the SATCOM system **20** to achieve maximum frequency re-use. In contrast, for SATCOM systems in which the spot beams are contiguous, or overlap, signals from adjacent spot beams cause interference.

To overcome the interference from adjacent spot-beams, the SATCOM system **20** uses a frequency assignment, in which the frequency bands used for the uplink and downlink signals **710** are divided into several sub-bands, typically between four (4) and seven (7) sub-bands. For example, if a SATCOM system uses four contiguous spot beams to cover CONUS, the uplink and downlink frequency bands would be divided into four sub-bands. Each spot beam would be assigned a separate sub-band for use on the uplink and downlink signal. Although using a frequency assignment limits the interference between adjacent spot beams, the effective bandwidth available is reduced by one quarter. By spatially isolating each spot beam from every other spot beam according to an embodiment of the invention, there is no interference. Therefore, sub-bands are not necessary and the entire frequency band is available for use in every spot beam. Spatially isolating the spot beams increases the bandwidth available for signal transmission by a factor of four.

In the case of intra-beam configuration, the ground terminals **704** and hub **706** are located within the same beam. The intra-beam configuration operates in a similar manner to the "hub" configuration discussed above. A single ground terminal **704** transmits a signal on the uplink frequency to the satellite **708**, which retransmits the signal on the downlink frequency to another ground terminal **704**. The satellite **708** then transmits the signal on the downlink frequency to the appropriate ground terminal **704**.

If a ground terminal **704** in a first spot beam wishes to communicate with a ground terminal **704** in a second spot beam, the first ground terminal transmits a signal **710** on the uplink frequency to the satellite **708**, which retransmits the signal **712** on the downlink frequency to the hub **706** within the same spot beam. The signal is then routed over a land-based, high-speed wide-area network (WAN) **714** to the hub **706** in the same spot beam as the second ground terminal. The hub **706** transmits the signal on the uplink frequency to the satellite **708** for retransmission to the second ground terminal over the downlink frequency.

In a similar manner, a one-way broadcast signal may be transmitted to every spot beam. The one-way broadcast may originate from a ground terminal located in a single spot beam. The broadcast signal is transmitted to the GEO satellite, which re-transmits the broadcast to the hub located in the same spot beam. The signal may originate from the hub or from a source outside the network through the WAN. The hub then transmits the broadcast signal to the GEO satellite, which retransmits the signal to every ground terminal in the spot beam.

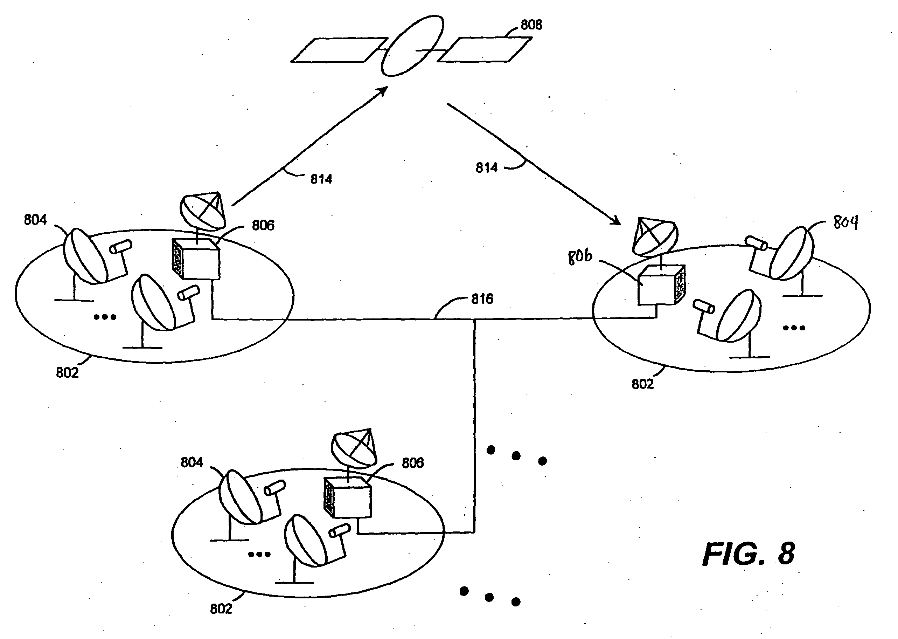

FIG. 8 is an illustration of an exemplary embodiment operating in the inter-spot beam configuration. In this configuration, each hub **806** in a spot beam **802** communicates with another hub in another spot beam through the GEO satellite **808** in a hub-to-hub link **814**. This allows individual terminals **804** in a first spot beam to communicate with individual terminals **804** in a second spot beam. First, a ground terminal **804** in a first spot beam transmits a signal to the GEO satellite **808**, which retransmits the signal to the hub **806** located in the first spot beam. The hub **806** determines the appropriate hub to which to route the signal. Once the signal processing is complete and the signal routed to the appropriate hub via the network link numbered **816**, the signal is transmitted by the hub **806** in the first spot beam to the GEO satellite **808**, which retransmits the signal to the hub **806** in the second spot beam. Finally, the hub numbered **806** in the second spot beam transmits the signal to the appropriate ground terminal **804** in the second spot beam, or to the GEO satellite **808**.

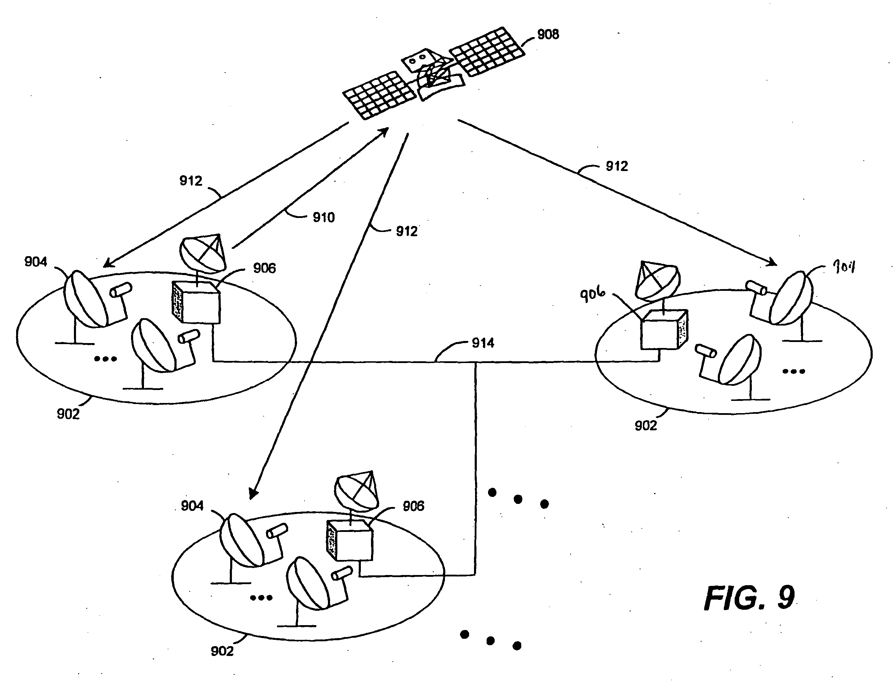

FIG. 9 is an illustration of an exemplary embodiment operating in an inter-beam broadcast configuration. A hub **906** in a first spot beam transmits a broadcast signal **910** on the uplink frequency to the GEO satellite **908**. The GEO satellite **908** receives the broadcast signal **910**, shifts the signal frequency, to the downlink frequency and re-transmits a signal **912** to each spot beam **902**. The broadcast signal **910** may originate from either an individual land-based terminal **904** or from the hub **906** located in the spot beam. The hub **906** in each spot beam **902** can communicate with the remaining hub via a network link **914**.

The broadcast signal **910** may be transmitted in one of two ways. First, the signal may be a local broadcast signal intended only for reception by ground terminal within the spot beam where the signal originated. For example, in the greater Atlanta area, a local broadcast, such as a local news broadcast, is typically intended to be seen only by viewers within the greater Atlanta area. Each news agency may transmit their broadcast signal directly from a ground terminal or may route the signal through a local hub centrally located within the spot beam. The local news broadcast signal is transmitted to the GEO satellite, which re-transmits the signal to viewers residing in the greater Atlanta area.

Secondly, the broadcast signal may be a locally generated signal within an individual spot beam intended for national broadcast. Under this scenario, an individual ground terminal or a local hub located within a first spot beam transmits a broadcast signal to the GEO satellite on the uplink frequency. The GEO satellite then broadcasts the signal into every spot beam where it is received by the individual ground terminals. An example of this mode of broadcast signal would be a national news service, such as Cable News Network (CNN), which is located in Atlanta, Georgia. The CNN broadcast signal, which originates in Atlanta, is transmitted from an individual ground terminal in the spot beam providing coverage to the greater Atlanta area to the GEO satellite. The GEO satellite then re-broadcasts the signal not only to each ground terminal in the same spot beam, but to each ground terminal in every spot beam.

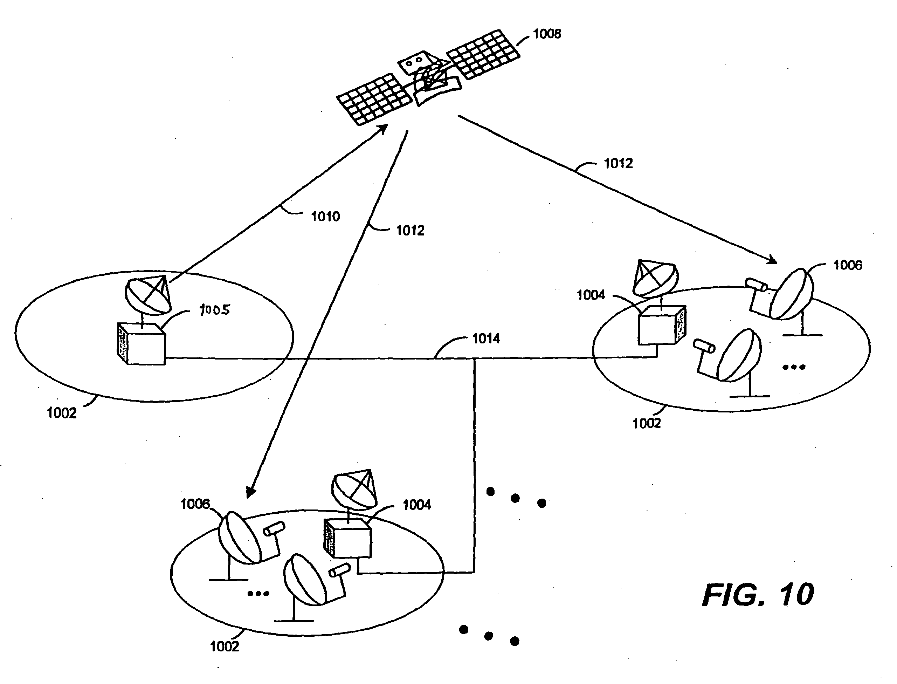

FIG. 10 is an illustration of an exemplary embodiment operating in a remote-hub broadcast configuration. Again, the SATCOM system comprises a series of spot beams **1002** originating from the satellite **1008** and illuminating the earth surface. At least one spot beam **1002** encompasses only a single, remote hub **1005**. Each of the remaining spot beams **1002** encompass a number of ground terminals **1006** and a single hub **1004**. Typically, the spot beam that encompasses the remote hub is the same size as the other spot beams in the network. However, the remote hub may be located in a remote portion of the CONUS, where the demand for satellite service is low, such as in the Northern Plains States. In this case, the spot beam covering the remote hub may be considerably larger or smaller than the remaining spot beams.

The remote hub **1005** may receive a national broadcast signal **1012**, which originates from any specified source. The signal is fed to the remote hub **1005** through a WAN **1014** for transmission to the GEO satellite **1008**. For example, the broadcast signal **1012** may be a national broadcast signal that is intended to be transmitted to every ground terminal in the CONUS. For example, a national news agency, such as the National Broadcasting Company (NBC) may transmit its broadcast signal **1010** from the remote hub to the GEO satellite for transmission back to every ground terminal. Alternatively, every hub **1004** may be connected to the remote hub **1005** through the WAN **1014**. Each hub **1004** could then send the local broadcast signal to the remote hub **1005** via the WAN **1014** for transmission on the national broadcast signal, whenever local events warranted broadcasting news on a national scale.

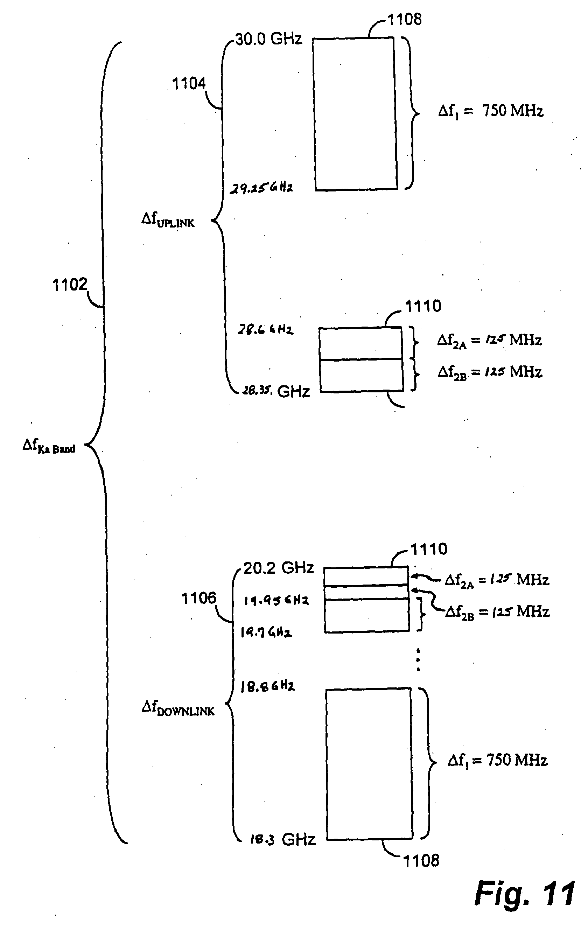

FIG. 11 is an illustration of the frequency allocation of the uplink signal and the downlink signal for inter-spot beam configuration based on signal frequency in accordance with an exemplary embodiment of the present invention. Specifically, FIG. 11 illustrates an exemplary frequency allocation for the Ka-band frequencies **1102**, which typically range between 18.3 GHz and 30.0 GHz. The Ka-band frequency typically has an uplink frequency band **1104** ranging from about 28.35 GHz to about 30.0 GHz and a downlink frequency band **1106** ranging from about 18.3 GHz to about 20.2 GHz. The uplink and downlink frequency bands may further be divided into sub-bands. The first sub-band **1108** may be used for the broadcast transmission and is typically 750 MHz wide to support hubs which provides a nearly symmetrical data rate over a 36 MHz bandwidth. It will be appreciated that the frequency allocation defined in FIG. 11 represents only one of many possible different allocations of the frequency spectrum to support the exemplary satellite communication system.

The second sub-band **1110** may be used for a SATCOM return channel from individual terminals. The second sub-band is typically 250 MHz wide and supports 250 individual ground terminals each with a 1 MHz bandwidth. The use of the two separate bandwidths in the two sub-bands allows the SATCOM system to have an asymmetrical data rate that is characteristic of most Internet access, i.e., a low-speed uplink data rate and a high-speed downlink data rate to minimize transmitter power and dish size for the ground terminal.

The SATCOM ground terminal typically provides high gain uplink spot beams, thereby minimizing the need for ground terminal with a high effective radiated power (ERP). Additionally the SATCOM ground terminal may provide a high power SATCOM transmitter into the narrow downlink spot beam, which minimizes the size of the receiving aperture on the ground. Typical uplink data rates are envisioned in the 1-2 million bits per second (Mbps), while the downlink will provide peak rates of 20-40 Mbps. The uplink air interface typically will be frequency division multiple access (FDMA) with time division multiple access (TDMA) overlaid to further accommodate lower data rates. For example, the downlink air interface may be DVB-S, a well-accepted protocol which can accommodate a combination of MPEG-2 video and data. The important point is that the hub service allows for different air interfaces on the uplink/downlink without on-board processing on the satellite.

For intra-beam services, a portion of the second uplink band used by the ground terminals is allocated to the "intra-beam" service and depicted as Δf_{2A}. This portion of the band is then filtered at the input of each receive spot beam. The designation of an "inter-beam" signal may also be accomplished by restricting part of the band to the "inter-beam segment, shown as Δf_{2B}.

Because the frequency of each ground terminal and hub are assigned and coordinated within the system, not only the ground terminals but also the hub can provide "intra-beam" and "inter-beam" communications. This allows the introduction of a new concept of a high-speed ground terminal that uses the same uplink format as the hub. This terminal will be referred to as a "commercial" terminal, or as a "remote hub." These terminals can transmit into the "intra-beam" service, or into the "inter-beam" or broadcast service, in the same way as the ground terminals using a different part of the uplink band with a different air interface. For example, a "remote hub" in one spot beam is assigned a frequency or polarization that is allocated to "broadcast", and that channel is broadcast into all downlink beams.

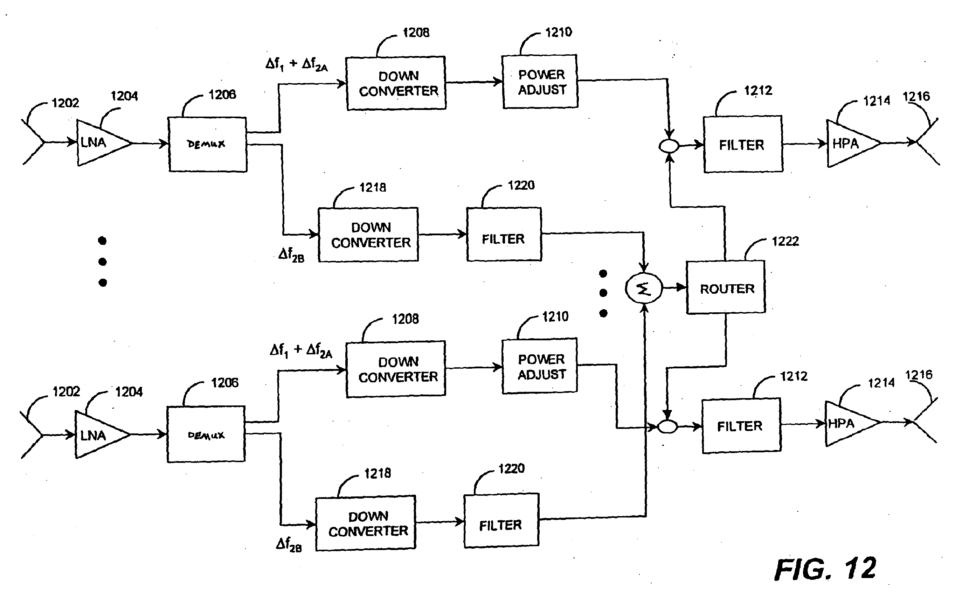

FIG. 12 is an illustration of an exemplary frequency-based router circuit used for the inter-spot beam configuration. The frequency-based router circuit consists of *n* identical circuits connected to a single router **1222**, where *n* is the number of spot beams used by the SATCOM system. An uplink signal, comprising both the first and second sub-bands, enters the router through one of the antennas **1202** and is then amplified by a linear LNA **1204**. The signal then passes through a demultiplexer **1206**, or "demux," which separates the signal into two signals. The first signal is used for intra-beam routing and consists of the broadcast signal in the first sub-band Δf_{1,} and the intra-beam segment Δf_{2A} signal. The intra-beam signal then passes though a downconverter **1208**, which shifts the frequency to the downlink frequency. Next, the intra-beam signal passes through a power adjust circuit **1210**, in which the output transmission power is set. Next, the intra-beam signal is filtered in a filter **1212** to remove unwanted noise from the signal. Finally, the signal passes through an amplifier **1214** before it is transmitted via antenna **1216** on the downlink to the ground terminals located within the same spot beam.

The second signal is used for inter-beam routing, which consists of the inter-beam portion, Δf_{2B} of the second sub-band. The inter-beam portion, Δf_{2B} of the second sub-band is further separated into *n* equal segments, where *n* is the number of spot beams employed by the SATCOM system. Each segment directly corresponds to an individual spot beam (i.e., the first segment corresponds to the first spot beam, the second segment corresponds to the second spot beam, etc.). The frequency of the inter-beam signal is shifted to the downlink frequency by passing the signal through a second downconverter **1218**. The signal then passes through a filter **1220** to remove unwanted noise before passing through a router **1222**. The router **1222** then redirects the signal to the appropriate antenna **1216**, depending on which segment of the inter-beam frequency, Δf_{2B} was used to transmit the signal. For example, if the signal is placed in the first segment of the sub-band, the router will redirect the signal to the antenna corresponding to the first spot beam, and so on. The inter-beam signal is filtered by the filter numbered **1212** and amplified by the amplifier **1214** before being transmitted through the appropriate spot beam to the second ground-terminal.

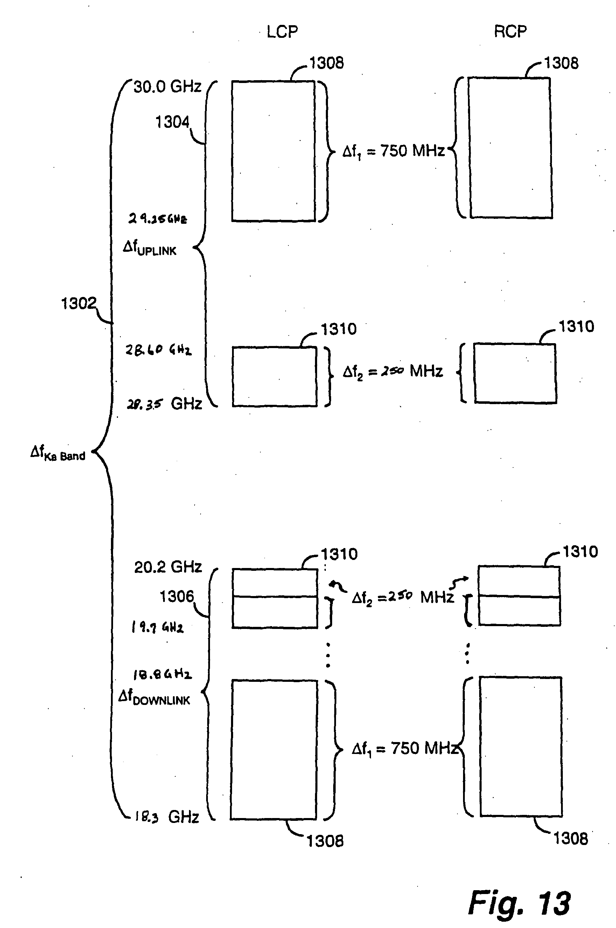

FIG. 13 is an illustration of the frequency allocation of the uplink signal and the downlink signal in the Ka-band frequency for use with polarization-based routing in the inter-spot beam mode in accordance with an exemplary embodiment of the present invention. The frequency allocation **1302** for the Ka-band typically range between 18.3 GHz and 30.0 GHz. The Ka-band frequency typically has an uplink frequency band **1304** ranging from about 28.35 GHz to about 30.0 GHz and a downlink frequency band **1306** ranging from about 18.3 GHz to about 20.2 GHz. However, there are two identical channels for the uplink and the downlink frequencies: one for a right circularly polarized (RCP) signal and a second channel for a left circularly polarized (LCP) signal.

The uplink and downlink frequency bands may be further divided into sub-bands. The first sub-band **1308** may be used for broadcast transmission and is typically 750 MHz wide. The second sub-band **1310** may be used for a SATCOM return channel from individual hubs and is typically 250 MHz wide.

Each SATCOM ground terminals would employ a dual polarized uplink antenna with a switchable transmitter that could excite either polarization. For one polarization, such as RCP, the received signal on the satellite would go through the normal bent pipe processing into the same downlink spot beam. For the other uplink polarization, such as LCP, the received signal would be channeled through the on-board a polarization-based router to each of the other spot beams. Those skilled in the art will appreciate that the frequency allocation defined in FIG. 13 represents only one of many possible different allocations of the frequency spectrum to support the exemplary satellite communication system.

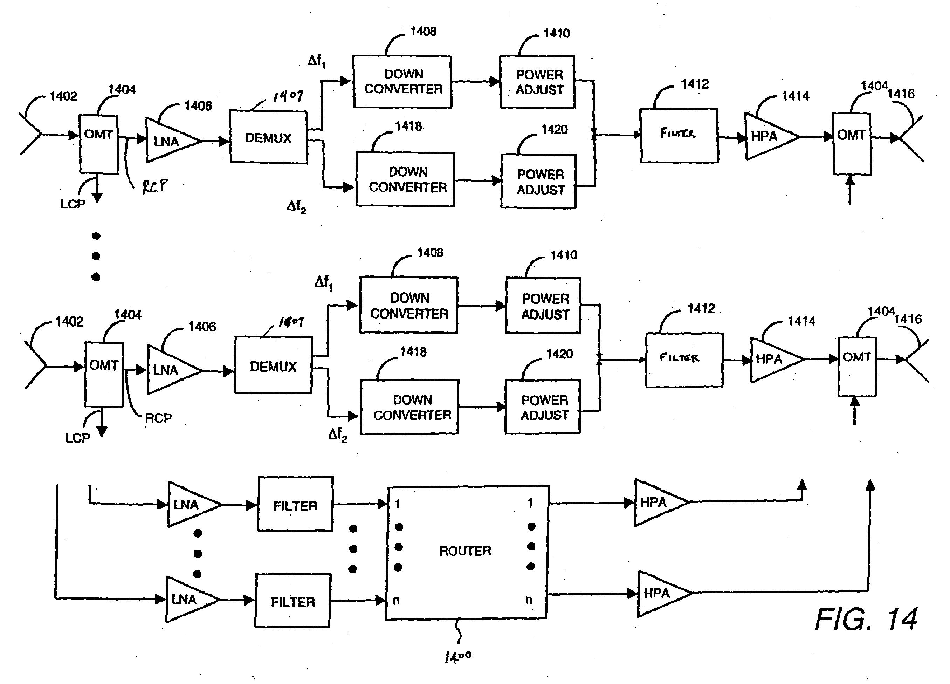

FIG. 14 is an illustration of an exemplary polarization-based router circuit used for inter-spot beam mode. The uplink signal, containing both RCP and LCP signals, is passed by an antenna **1402** and split into two separate signals by an orthogonal mode transducer (OMT) **1404**. The LCP signal, which is used for inter-beam communications, is directed to a router **1400** for transmission to the appropriate spot beam. The LCP signal is amplified and filtered before entering the router **1400**, where, in turn, the signal is directed to the appropriate spot beam.

The RCP signal, which is used for intra-beam communications and contains both the broadcast signal and the ground terminal return signal, passes through an amplifier **1406** before being separated by a demultiplexer **1407**. After the two signals are separated, downconverters **1408**, **1418** shift each signal to the downlink frequency. The signals then pass through power adjust circuits **1410**, **1420** to adjust the amplitude of the signals. Next, the signals are combined and passed through a filter **1412** before being amplified by a high power amplifier **1414**. The RCP signal then passes through another orthogonal mode transducer **1404** where it is combined with an LCP signal intended for inter-beam communications. The combined signal is transmitted by an antenna **1416**.

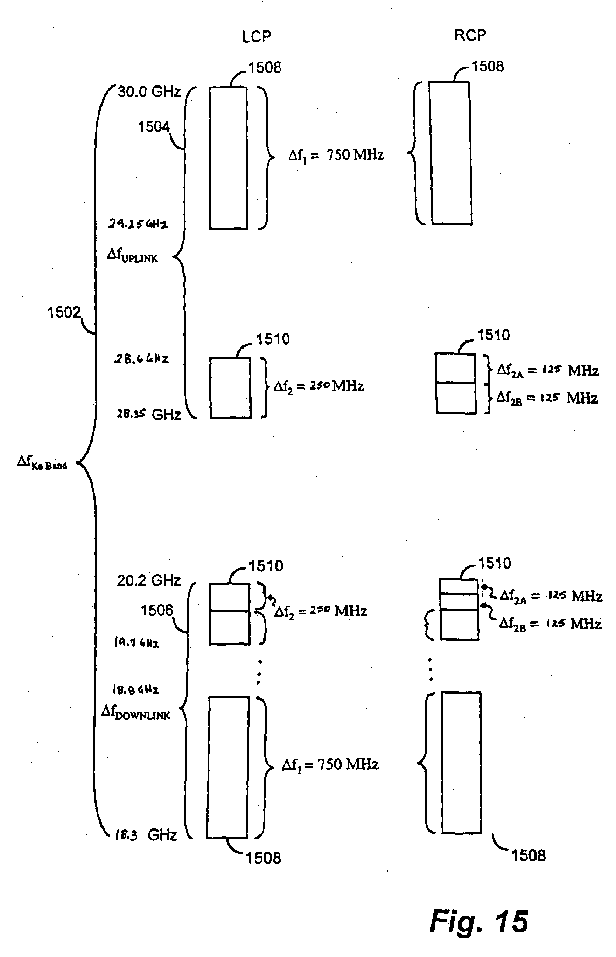

FIG. 15 is an illustration of the frequency allocation of the Ka-band signal for an inter-spot beam router configuration based on both frequency and polarization of the signal in accordance with an exemplary embodiment of the present invention. The Ka-band **1502** is divided into an uplink band **1504** with a frequency of Δfᵤₚₗᵢₙₖ, and a downlink band **1506** with a frequency of Δf_{downlink}. Each uplink band and downlink band has two signals, one signal having a left hand circular polarization and the other signal having a right hand circular polarization. The uplink and downlink frequency bands may be further divided into sub-bands. A first sub-band **1508** may be used for broadcast transmission and is typically 750 MHz wide. A second sub-band **1510** may be used for a SATCOM return channel and is typically 250 MHz wide. It will be appreciated that the frequency allocation illustrated in FIG. 15 represents only one of many possible different allocations of the frequency spectrum to support the exemplary satellite communication system.

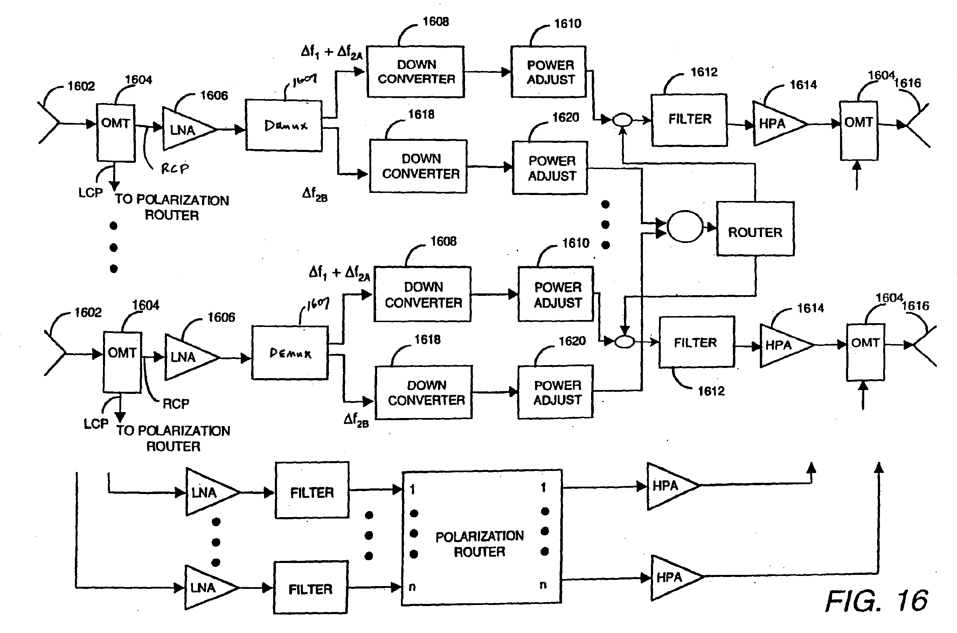

FIG. 16 is an illustration of a combination frequency/polarization-based router circuit used for inter-spot beam mode communications on board a satellite in accordance with an exemplary embodiment of the present invention. Specifically, FIG. 16 illustrates an exemplary circuit used for routing of the user uplink based on polarization and frequency of the MF/TDMA return channel. The satellite ground terminal would employ a dual polarized uplink antenna with a switchable transmitter that could excite either polarization. For the LCP uplink polarization, the received signal would be channeled through the on-board router to other spot beams. For the RCP, the received signal is separated into 2 sub-bands by a demultiplexer. One sub-band is downconverted and routed to the appropriate beam by the frequency router. The other sub-band would go through the normal bent pipe processing into the same downlink spot beam.

Referring still to FIG. 16, the uplink signal, containing both RCP arid LCP signals, is passed by an antenna **1602** and split into two separate signals by an orthogonal mode transducer (OMT) **1604**. The LCP signal, which is typically used for inter-beam communications, is directed to a router **1600** for transmission to the appropriate spot beam. The LCP signal is amplified and filtered before entering the router **1600**, where, in turn, the signal is directed to the appropriate spot beam.

The RCP signal, which is typically used for intra-beam communications and contains both the broadcast signal and the ground terminal return signal, passes through an amplifier **1606** before being separated by a demultiplexer **1607**. After the two signals are separated, down coverters **1608**, **1618** shift each signal to the downlink frequency. The signals then pass through power adjust circuits **1610**, **1620** to adjust the amplitude of the signals. Next, the signals are combined and passed through a filter **1612** before being amplified by a high power amplifier **1614**. The RCP signal then passes through another orthogonal mode transducer (OMT) **1604**, where it is combined with an LCP signal intended for inter-beam communications. The combined signal is transmitted by an antenna **1616**.

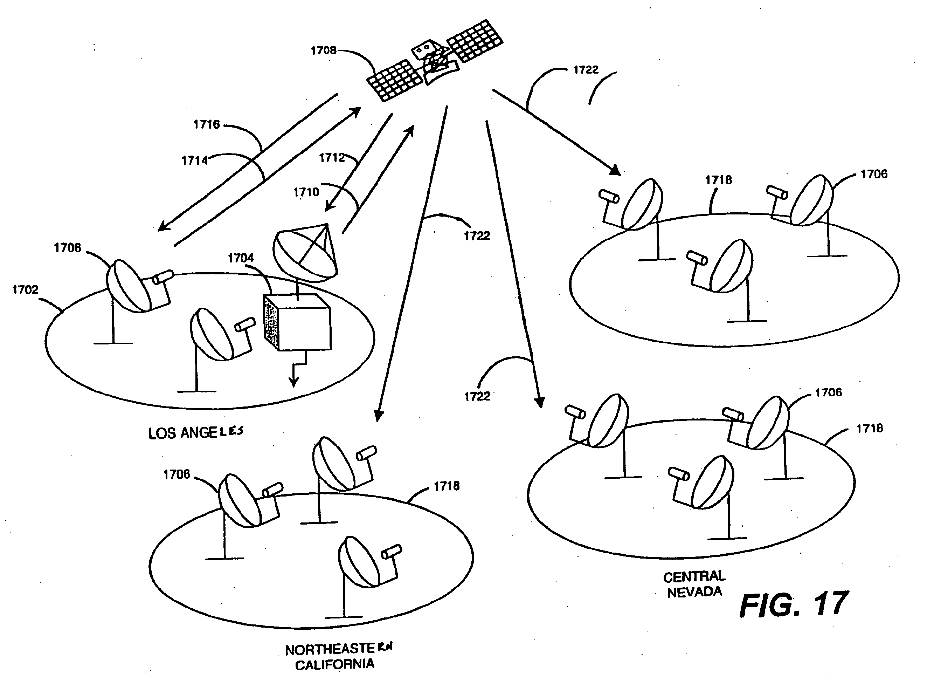

FIG. 17 illustrates a parent-dependent configuration for the inter-beam mode, in which a hub **1704** is installed in the parent beam **1702** but not in the dependent beams **1718**, in accordance with an exemplary embodiment of the present invention. If a hub is not installed in a spot beam, the exemplary embodiment allows for an inter-beam access from a ground terminal **1706** to a hub in another spot beam. This allows the ground terminal to access downlinks for the inter-beam broadcast service, but not the "local channel" delivery service. The parent-dependent configuration may be used for highly populated areas that are surrounded by sparsely populated areas. For example, the parent beam can be directed to cover Los Angeles, while the dependent beams can cover Northeastern California and Central Nevada, as shown in FIG. 17.

The parent beam **1702** provides coverage for the highly populated area while one or more dependent beams **1718** provide coverage for the sparsely populated areas. Each parent spot beam has a hub numbered **1704** centrally located within the footprint of the spot beam and a number of individual ground terminals **1706**. For intra-beam communications between the ground terminals **1706** and the hub **1704** or between two ground terminals **1706**, the ground terminals transmit an uplink signal **1714** having one type of polarization, such as left circular polarization to the GEO satellite **1708** equipped with a polarization-based router circuit. The router would then route the left circularly polarized signal as a downlink signal **1716** back to the parent spot beam.

For broadcast transmissions, the hub **1704** in the parent spot beam **1702** transmits two broadcast signals **1710**, one right circularly polarized and one left circularly polarized, simultaneously to the GEO satellite. A polarization-based router in the GEO satellite separates the two signals and transmits the left circularly polarized signal **1716** back to the parent spot beam and the right circularly polarized signals **1722** down to the dependent spot beams.

Additionally, frequency routing may be added to the polarization routing to provide added flexibility in determining which programs are transmitted to which dependent beams. For example, a right circularly polarized frequency band used for broadcast data may be divided into *n* equal segments, where *n* is the number of spot beams employed by the SATCOM system. Each segment directly corresponds to an individual dependent spot beam (i.e., the first segment corresponds to a first dependent spot beam, the second segment corresponds to a second dependent spot beam, etc.). Separate, independent broadcast signals could then be assigned to the separate segments to provide localized broadcast data to these areas covered by the dependent spot beams.

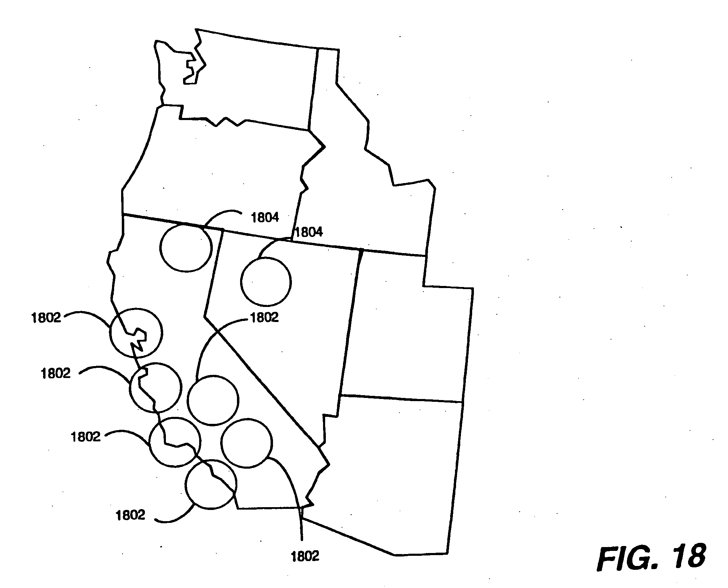

FIG. 18 illustrates a spot beam distribution for a parent-dependent inter-beam service in accordance with an exemplary embodiment of the present invention. Parent spot beams **1802** may provide coverage to highly populated area such as the region stretching from San Francisco, California to San Diego, California. In each of these parent spot beams, both local and broadcast services may be provided. However, in areas such as central Nevada, and northern California, where the population and demand for services is small, dependent spot beams **1804** may be used to receive broadcast services from the parent beams.

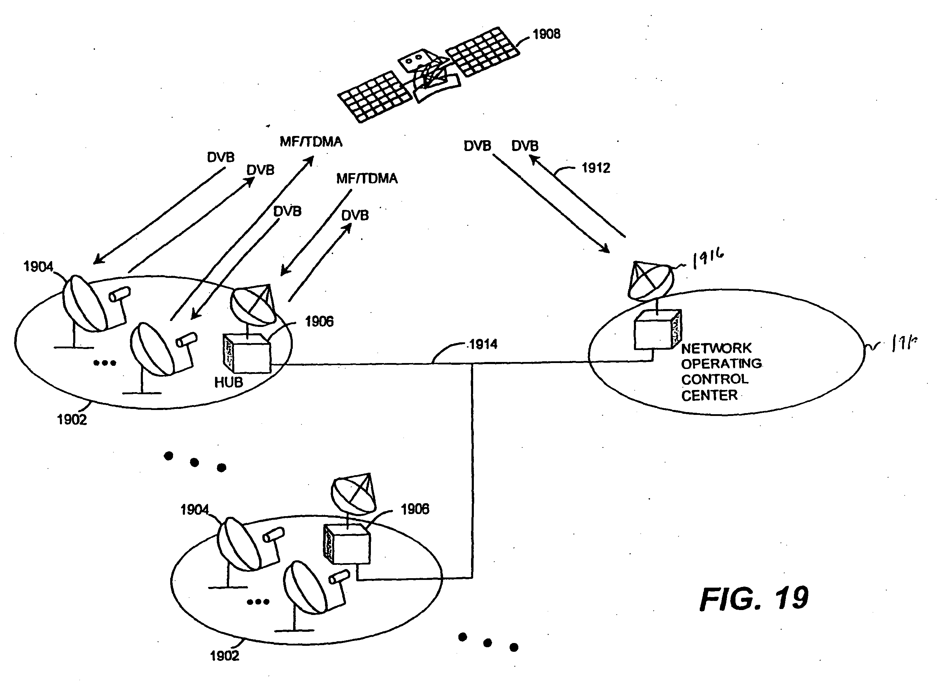

FIG. 19 illustrates an alternative method for broadcast service routing. A Network Operating Control Center (NOCC) **1916** operates in a NOCC spot beam **1910**, which is created in an area separated from all the other service spot beams numbered **1902** in accordance with an exemplary embodiment of the present invention. A portion of the uplink band is set aside for broadcast user return signals. These signals, once received by the input spot beam antennas and amplified, are combined in the frequency domain with a power combiner. The Network Operating Control Center **1916** coordinates uplink frequencies so that no two broadcast signals use the same frequency band. The combined signal is routed for broadcast by the satellite numbered **1908** to the ground terminals **1904** in the downlink spot beams **1902** via a retransmission **1912** from the Network Operating Control Center **1916**. This service is a "double-hop" service because of the intermediate transmission to the network control center. Alternatively, the signals intended for broadcast from the Network Operations Control Center **1916** could be delivered through the WAN **1914** from a hub **1906** or user of the satellite network or directly from an outside source.

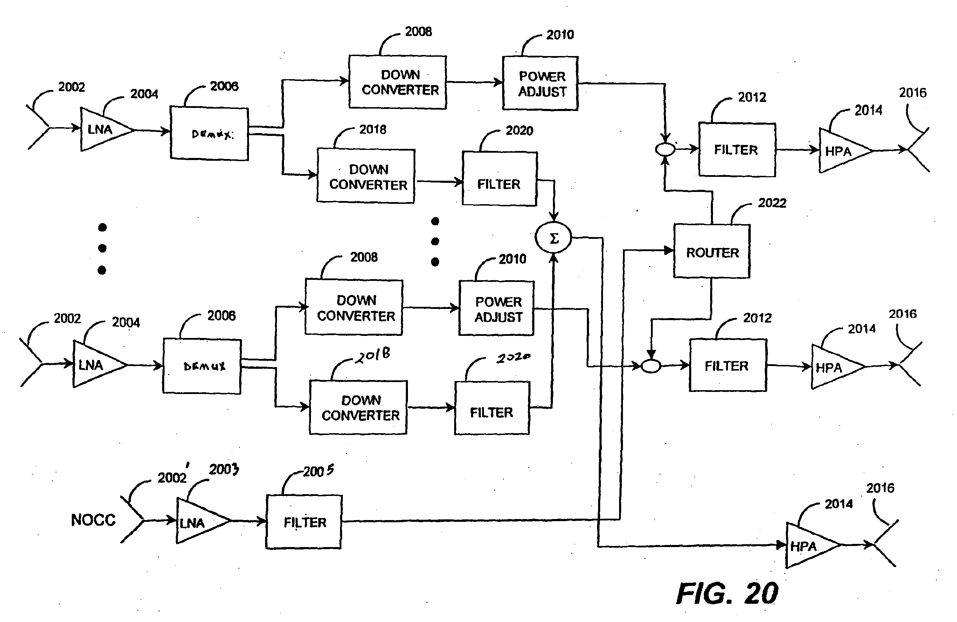

FIG. 20 illustrates the use of frequency-based routing to accommodate a NOCC within the network of spot beams in accordance with an exemplary embodiment of the present invention. The frequency-based router circuit comprises *n* identical circuits connected to a signal router **2022** or to a high power amplifier **2014**, where *n* is the number of spot beams used by the SATCOM system. In contrast to the frequency-based router circuit shown in FIG. 12, a network operating control center provides an input to the router circuit.

A numbered uplink signal can enter the router circuit through one of the antennas numbered **2002** and is then amplified by a linear LNA **2004**. The signal then passes through a demultiplexer **2006**, or "demux," which separates the signal into two signals. The first signal passes through a down converter numbered **2008**, which shifts the frequency to the numbered downlink frequency. In turn, this downconverted signal passes through a numbered power adjust circuit **2010**, in which the output transmission power is set. The output of the power adjust circuit **2010** is passed to the filter **2012** to remove unwanted noise prior to increasing the amplitude of the signal at the amplifier numbered **2014**. The output of the amplifier **2014** is transmitted by the antenna **2016**.

The second signal output by the demultiplexer **2006** is passed to a down converter **2018**, which shifts the frequency to the downlink frequency. In turn, the output of the down converter numbered **2018** is filtered by a filter **2020** to remove unwanted noise. This process can be completed numbered *n* times based upon the *n* number of spot beams employed by the SATCOM's system. Each output of filter **2020** is summed at a combiner and output to an amplifier **2014** for transmission via the antenna **2016**.

The input signal provided by the Network Operating Control Center is received by the antenna **2002**', amplified by the amplifier **2003**, filtered by the filter **2005**, and output to the router **2022**. In turn, the router **2022** can output a redirected signal to the appropriate antenna **2016**.

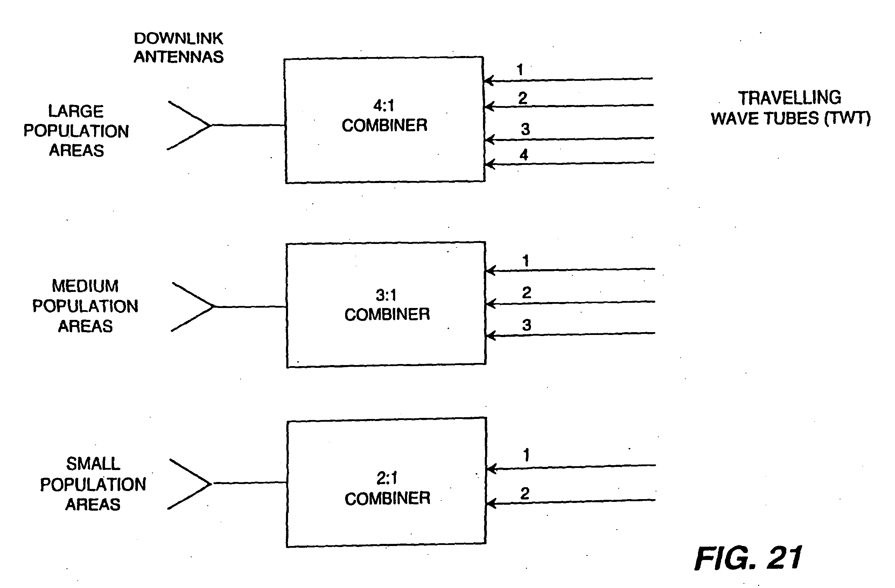

FIG. 21 illustrates an exemplary system for controlling the satellite spot beam downlink transmitter power to adjust the channel capacity by combining circuits. The spot beam network concept allows some unique flexibilities on-board the satellite that a conventional DBS satellite does not have. A standard architecture Ku-band DBS satellite must provide full coverage of CONUS geography. Therefore, the DBS satellite must transmit its downlink power at a more or less constant level across the area. This is particularly wasteful when transmission of local channel DBS is only intended for a small area within CONUS. Additionally, spot beams over large population centers may require more capacity than less populated areas. Also, the peak periods of use will vary slightly from East Coast to West Coast during the day leading to variable power requirements. The variable power requirements may be accommodated by adopting a total power management control concept on the satellite in which downlink beams are excited by transmissions circuits, which combine 1, 2, or 4 high power sources. For example, consider a network of 100 spot beams in the CONUS geography. Each could transmit 15W on a continuous DVB downlink basis, totaling 1.5 KW of transmit power. Alternately, the top 10 population centers could be allocated 40W, the next 20 centers 20W, and the remaining 70 centers only 10W.

It should be understood that the foregoing pertains only to exemplary embodiments of the present invention, and that numerous changes may be made to the embodiments described herein without departing from the spirit and scope of the invention.

The following is a list of further preferred embodiments of the invention:

### Embodiment 1:

A satellite communications system for distributing information to user terminals located within a plurality of spot beams, the satellite communications system comprising:
a communications satellite in a geosynchronous orbit;
a plurality of hubs each located within a respective spot beam, and adapted to:
   route information received from a first user terminal located within a first spot beam via the communications satellite to a second user terminal located within a selected one of the spot beams via the communications satellite;
   wherein the communications satellite is adapted to:
   receive the information according to a first protocol from the first user terminal;
   transmit the information according to the first protocol to a first hub located within a selected one of the spot beams;
   receive the information according to a second protocol from the first hub; and
   transmit the information according to the second protocol to a second user terminal located within a selected one of the spot beams.

### Embodiment 2:

The satellite communications system according to embodiment 1 wherein each of the spot beams is spatially isolated from the other spot beams.

### Embodiment 3:

The satellite communications system according to embodiment 1 wherein the first hub is located within the first spot beam.

### Embodiment 4:

The satellite communications system according to embodiment 1 wherein the first hub located within one of the spot beams other than the first spot beam.

### Embodiment 5:

The satellite communications system according to embodiment 1 wherein the communications satellite is further adapted to:
transmit the information to the second user terminal at a first frequency; and
transmit the information at a second frequency to a third user terminal located within a selected one of the spot beams.

### Embodiment 6:

The satellite communications system according to embodiment 1 wherein the communications satellite is further adapted to:
transmit the information to the second user terminal at a first polarization; and
transmit the information at a second polarization to a third user terminal located within a selected one of the spot beams.

### Embodiment 7:

The satellite communications system according to embodiment 1 further comprising a network control center adapted to assign frequencies and polarizations for the information received from the first user terminal and for the information transmitted to the second user terminal.

### Embodiment 8:

The satellite communications system according to embodiment 1 wherein the first protocol and the second protocol are the same protocol.

### Embodiment 9:

The satellite communications system according to embodiment 1 wherein the communications satellite further comprises a router adapted to direct the information to user terminals located within a selected one of the spot beams by selecting the frequency or polarization of the information.

### Embodiment 10:

The satellite communications system according to embodiment 1 wherein the communications satellite comprises a downlink transmitter power controller to adjust the power level at which the information is transmitted to the second user terminal.

### Embodiment 11:

The satellite communications system according to embodiment 1 further comprising a wide area network interconnecting a selected subset of the hubs.

### Embodiment 12:

A user terminal for communicating information with other user terminals through a satellite communications system, the satellite communications system including a communications satellite in geosynchronous orbit and a plurality of hubs, the communications satellite including an antenna, each hub located in one of a plurality of spot coverage areas formed by the antenna, the user terminal being adapted to:
transmit information to one of the hubs via the communications satellite according to a first protocol; and
receive information from the hub via the communications satellite according to a second protocol.

### Embodiment 13:

The user terminal according to embodiment 12 wherein the user terminal is located in the spot coverage area in which the hub is located.

### Embodiment 14:

The user terminal according to embodiment 12 wherein the user terminal is located in one of the spot coverage areas other than the one in which the hub is located.

### Embodiment 15:

The user terminal according to embodiment 12 wherein the first protocol and the second protocol are the same protocol.

### Embodiment 16:

A method for communicating between user terminals through hubs, the user terminals being located in spot coverage areas defined by a spot beam antenna on a geosynchronous communications satellite, each of the hubs located in a respective spot coverage area, the method comprising the steps of:
transmitting a first signal from a first user terminal to a hub through the satellite according to a first protocol; and
receiving a second signal at a second user terminal from the first hub through the satellite according to a second protocol.

### Embodiment 17:

The user terminal communicating method according to embodiment 16 further comprising the steps of:
at the hub, transmitting the second signal at a selected frequency and a selected polarization to the satellite; and
at the satellite, routing the second signal to at least one of the spot coverage areas based on the frequency and polarization of the second signal.

### Embodiment 18:

The user terminal communicating method according to embodiment 16 wherein the first signal transmitting step comprises transmitting the first signal from the first user terminal through the satellite to a first hub located in a different spot coverage area.

### Embodiment 19:

The user terminal communicating method according to embodiment 16 further comprising the step of receiving the second signal at a third user terminal, wherein the second user terminal and the third user terminal are located in different spot coverage areas.

### Embodiment 20:

The user terminal communicating method according to embodiment 16 further comprising the step of receiving the second signal at user terminals located within each of the spot coverage areas.

### Embodiment 21:

The user terminal communicating method according to embodiment 16 further comprising the step of receiving the second signal at a third user terminal, wherein the first, second, and third user terminals are located in the same spot coverage area.

### Embodiment 22:

The user terminal communicating method according to embodiment 16 further comprising the step of communicating between at least two of the hubs through a ground-based communications link.

### Embodiment 23:

The user terminal communicating method according to embodiment 22 wherein the communicating step comprises communicating over a wide area network.

### Embodiment 24:

The user terminal communicating method according to embodiment 16 further comprising the step of assigning, in a network operations control center, frequencies and polarizations to the hubs and user terminals.

### Embodiment 25:

A frequency-based router circuit for use in a satellite communications system, the satellite communications system comprising a ground hub; a communications satellite; and a plurality of user terminals located in a plurality of spot coverage areas,
the router circuit comprising:
a first demultiplexer for separating an inter-beam signal from a plurality of intra-beam signals;
a second demultiplexer for separating the intra-beam signals; and
a router adapted to route each of the inter-beam signal and the intra-beam signals to respective spot beam antennas on the satellite.

### Embodiment 26:

The frequency-based router circuit of embodiment 25 further comprising a plurality of downconverters for frequency converting respective inter-beam and intra-beam signals.

### Embodiment 27:

The frequency-based router circuit of embodiment 25 further comprising a power adjust circuit for setting the output power level of a selected at least one of the inter-beam signal and the intra-beam signals.

## Claims

1. A satellite communications system for distributing information to user terminals located within a plurality of spot beams, the satellite communications system comprising:
a communications satellite in a geosynchronous orbit;
a plurality of hubs each located within a respective spot beam, and adapted to:
route information received from a first user terminal located within a first spot beam via the communications satellite to a second user terminal located within a selected one of the spot beams via the communications satellite;
wherein the communications satellite is adapted to:
receive the information according to a first protocol from the first user terminal;
transmit the information according to the first protocol to a first hub located within a selected one of the spot beams;
receive the information according to a second protocol from the first hub; and
transmit the information according to the second protocol to a second user terminal located within a selected one of the spot beams.

2. The satellite communications system according to Claim 1 wherein each of the spot beams is spatially isolated from the other spot beams.

3. The satellite communications system according to Claim 1 wherein the first hub is located within the first spot beam.

4. The satellite communications system according to Claim 1 wherein the first hub located within one of the spot beams other than the first spot beam.

5. The satellite communications system according to Claim 1 wherein the communications satellite is further adapted to:
transmit the information to the second user terminal at a first frequency; and
transmit the information at a second frequency to a third user terminal located within a selected one of the spot beams.

6. The satellite communications system according to Claim 1 wherein the communications satellite is further adapted to:
transmit the information to the second user terminal at a first polarization; and
transmit the information at a second polarization to a third user terminal located within a selected one of the spot beams.

7. The satellite communications system according to Claim 1 further comprising a network control center adapted to assign frequencies and polarizations for the information received from the first user terminal and for the information transmitted to the second user terminal.

8. The satellite communications system according to Claim 1 wherein the first protocol and the second protocol are the same protocol.

9. The satellite communications system according to Claim 1 wherein the communications satellite further comprises a router adapted to direct the information to user terminals located within a selected one of the spot beams by selecting the frequency or polarization of the information.

10. The satellite communications system according to Claim 1 wherein the communications satellite comprises a downlink transmitter power controller to adjust the power level at which the information is transmitted to the second user terminal.

11. The satellite communications system according to Claim 1 further comprising a wide area network interconnecting a selected subset of the hubs.

12. A user terminal for communicating information with other user terminals through a satellite communications system, the satellite communications system including a communications satellite in geosynchronous orbit and a plurality of hubs, the communications satellite including an antenna, each hub located in one of a plurality of spot coverage areas formed by the antenna, the user terminal being adapted to:
transmit information to one of the hubs via the communications satellite according to a first protocol; and
receive information from the hub via the communications satellite according to a second protocol.

13. The user terminal according to Claim 12 wherein the user terminal is located in the spot coverage area in which the hub is located.

14. The user terminal according to Claim 12 wherein the user terminal is located in one of the spot coverage areas other than the one in which the hub is located.

15. The user terminal according to Claim 12 wherein the first protocol and the second protocol are the same protocol.

16. A method for communicating between user terminals through hubs, the user terminals being located in spot coverage areas defined by a spot beam antenna on a geosynchronous communications satellite, each of the hubs located in a respective spot coverage area, the method comprising the steps of:
transmitting a first signal from a first user terminal to a hub through the satellite according to a first protocol; and
receiving a second signal at a second user terminal from the first hub through the satellite according to a second protocol.

17. The user terminal communicating method according to Claim 16 further comprising the steps of:
at the hub, transmitting the second signal at a selected frequency and a selected polarization to the satellite; and
at the satellite, routing the second signal to at least one of the spot coverage areas based on the frequency and polarization of the second signal.

18. The user terminal communicating method according to Claim 16 wherein the first signal transmitting step comprises transmitting the first signal from the first user terminal through the satellite to a first hub located in a different spot coverage area.

19. The user terminal communicating method according to Claim 16 further comprising the step of receiving the second signal at a third user terminal, wherein the second user terminal and the third user terminal are located in different spot coverage areas.

20. The user terminal communicating method according to Claim 16 further comprising the step of receiving the second signal at user terminals located within each of the spot coverage areas.

21. The user terminal communicating method according to Claim 16 further comprising the step of receiving the second signal at a third user terminal, wherein the first, second, and third user terminals are located in the same spot coverage area.

22. The user terminal communicating method according to Claim 16 further comprising the step of communicating between at least two of the hubs through a ground-based communications link.

23. The user terminal communicating method according to Claim 22 wherein the communicating step comprises communicating over a wide area network.

24. The user terminal communicating method according to Claim 16 further comprising the step of assigning, in a network operations control center, frequencies and polarizations to the hubs and user terminals.

25. A frequency-based router circuit for use in a satellite communications system, the satellite communications system comprising a ground hub; a communications satellite; and a plurality of user terminals located in a plurality of spot coverage areas,
the router circuit comprising:
a first demultiplexer for separating an inter-beam signal from a plurality of intra-beam signals;
a second demultiplexer for separating the intra-beam signals; and
a router adapted to route each of the inter-beam signal and the intra-beam signals to respective spot beam antennas on the satellite.

26. The frequency-based router circuit of Claim 25 further comprising a plurality of downconverters for frequency converting respective inter-beam and intra- beam signals.

27. The frequency-based router circuit of Claim 25 further comprising a power adjust circuit for setting the output power level of a selected at least one of the inter-beam signal and the intra-beam signals.
